# EUROPEAN PATENT SPECIFICATION

(11) **EP 1 637 864 B1**
(45) Date of publication and mention of the grant of the patent: **21.12.2011**
(21) Application number: 04723731.8
(22) Date of filing: 26.03.2004
(51) Int. Cl.: B01J 20/26

(54) **PROCESS FOR PRODUCING A SEPARATING AGENT FOR CHROMATOGRAPHY**
VERFAHREN ZUR HERSTELLUNG EINES TRENNMITTELS FÜR CHROMATOGRAPHIE
PROCEDE DE PRODUCTION D'AGENT DE SEPARATION POUR CHROMATOGRAPHIE

(30) Priority: 26.03.2003 JP 2003085487
(43) Date of publication of application: 22.03.2006
(73) Proprietor: Daicel Chemical Industries, Ltd., Kita-ku, Osaka-shi Osaka 530-0001 (JP); Nagoya Industrial Science Research Institute, Nagoya-shi, Aichi 460-0008 (JP)
(72) Inventor: OKAMOTO, Yoshio, Nagoya-shi, 464-0004 (JP); YAMAMOTO, Chiyo, Kasugai-shi, Aichi 480-0304 (JP)
(74) Representative: Grünecker, Kinkeldey, Stockmair & Schwanhäusser
(86) International application number: PCT/JP2004/004271
(87) International publication number: WO 2004/086029

(56) References cited:
- EP-A- 0 527 235
- EP-A- 0 978 498
- EP-A- 0 985 682
- WO-A-97/38018
- WO-A-03/004534
- WO-A-03/085000
- JP-A- 3 170 501
- JP-A- 3 197 503
- JP-A- 3 261 729
- JP-A- 8 059 702
- JP-A- 10 245 409

## Description

### TECHNICAL FIELD

The present invention relates to a process for producing a separating agent for chromatography, and more specifically relates to a process for producing a separating agent for chromatography suitably used as a separating agent for high performance liquid chromatography (hereinafter, abbreviated as "HPLC") for separating optical isomers.

### BACKGROUND ART

Conventionally, a separating agent for chromatography utilizing chirality of a polysaccharide derivative has been widely known. An example of the polysaccharide derivative to be used for the separating agent for chromatography is an ester derivative or carbamate derivative of cellulose or amylose. The polysaccharide derivative is used for a separating agent for chromatography by being carried on a carrier such as silica gel for purposes of increasing a packing ratio of the separating agent into a column, facilitating handling thereof, enhancing mechanical strength thereof, and the like.

Such a separating agent for chromatography employing a polysaccharide derivative carried on a carrier has high optical isomer separability, and is used not only for analysis of optical isomers but also for large-scale preparative separation of optical isomers such as in production of various pharmaceuticals.

However, the conventional separating agent for chromatography employing a polysaccharide derivative has the polysaccharide derivative merely carried on a carrier through physical adsorption. Thus, the polysaccharide derivative may dissolve in an elution solvent depending on a kind of elution solvent, and the separating agent may become unusable.

In particular, large-scale preparative separation of optical isomers requires a raw material before separation to be dissolved in the elution solvent at high concentration. The elution solvent capable of such dissolving has a problem in that solubility of a polysaccharide derivative is generally high in the elution solvent.

Further, the polysaccharide derivative has low mechanical strength and thus has a problem in that when the polysaccharide derivative is used for a separating agent for HPLC in particular, the polysaccharide derivative cannot withstand a pressure in HPLC.

In order to prevent such problems, attempts have been made at chemically bonding a polysaccharide derivative on a surface of a carrier to prevent elution of the polysaccharide derivative in an elution solvent and to enhance mechanical strength of the polysaccharide derivative.

For example, JP-A-04-202141 discloses a separating agent for chromatography obtained through copolymerization of a polysaccharide derivative having a vinyl group introduced into a hydroxyl group of a polysaccharide through an ester bond or a urethane bond and a carrier having a vinyl group chemically bonded thereto, to thereby chemically bond the polysaccharide derivative and the carrier.

Further, in JP-B-07-030122, the inventors of the present invention have previously proposed a separating agent for chromatography obtained by chemically bonding the polysaccharide derivative to silica gel through an isocyanate compound, to thereby prevent elution of the polysaccharide derivative in an elution solvent.

In JP-A-11-171800, the inventors of the present invention have proposed to prevent elution of the cellulose derivative in an elution solvent by forming a three dimensional network structure through copolymerization of styrene and vinylbenzene on silica gel carrying thereon a cellulose derivative.

However, the separating agent for chromatography disclosed in each of the patent documents described above cannot completely prevent elution of the polysaccharide derivative fixed on the carrier in the elution solvent.

In this respect, the inventors of the present invention have proposed, in JP-A-2002-148247, a separating agent for chromatography having a high fixing ratio of a polysaccharide derivative on silica gel obtained by: introducing a polymerizable unsaturated group into a polysaccharide derivative in advance; preparing silica gel having introduced thereinto a 2-methacryloyloxyethyl group through a silane coupling agent; and chemically bonding the polysaccharide derivative and silica gel through copolymerization.

This separating agent for chromatography is capable of almost completely preventing elution of the polysaccharide derivative in the elution solvent, has excellent optical isomer separablity, and has high mechanical strength.

However, in the separating agent for chromatography disclosed in the patent document described above, the polysaccharide derivative alone has chirality necessary for separation of optical isomers, and the carrier having no chirality such as silica gel does not directly contribute to separation of optical isomers. Thus, in a case where the separating agent for chromatography is packed into a column, an amount of a compound to be optically resolved at one time is smaller by an amount of the carrier such as silica gel.

WO-A-03/004534 discloses a method of producing unsupported cellulosic particles suitable for chiral separation by treating a solution of amorphous cellulose under high shear stress conditions.

In JP-A-8-059702 the separating agent for optical isomers is obtained by mutually cross-linking only hydroxyl groups at the 6-position of cellulose or amylose carried on silica gel.

### DISCLOSURE OF THE INVENTION

The present invention has been made in view of conventional situations, and an object of the present invention is to provide a process for producing a separating agent for chromatography capable of preventing elution in an elution solvent, allowing optical resolution of a large amount of a compound at one time, and withstanding a high pressure.

The present invention provides:
(1) A process for producing a separating agent for chromatography, said separating agent using a polysaccharide derivative derived from a polysaccharide, the polysaccharide derivative having a structure in which part of the hydroxyl groups present in the polysaccharide are crosslinked with one another through a crosslinking molecule to form a three-dimensional network structure and non-crosslinked hydroxyl groups present in the polysaccharide are each modified with a modifying molecule, the crosslinking through a crosslinking molecule being performed between a hydroxyl group at 6-position of a pyranose ring or furanose ring and a hydroxyl group at 6-position of another pyranose ring or furanose ring, wherein the polysaccharide derivative is not carried on a carrier, wherein the process comprises the steps of:
   introducing protective groups into part of the hydroxyl groups present at 6-position of a pyranose ring or furanose ring in a polysaccharide;
   modifying with a modifying molecule each of the hydroxyl groups remaining in the polysaccharide having the protective groups introduced;
   releasing the introduced protective groups to recover the hydroxyl groups;
   dissolving in a solvent a recovered polysaccharide derivative obtained by recovering the hydroxyl groups in the release step;
   dispersing a porogen in an obtained solution of recovered polysaccharide derivative;
   maintaining in a desired form the solution of recovered polysaccharide derivative having the porogen dispersed and removing the solvent to form the recovered polysaccharide derivative in a desired form;
   crosslinking the recovered hydroxyl groups to one another through a crosslinking molecule; and
   washing the formed recovered or crosslinked polysaccharide derivative with a washing solvent capable of dissolving the porogen.
(2) The process of (1), wherein the maintaining step comprises the steps of:
   dropping the solution of the recovered polysaccharide derivative having the porogen dispersed into a solution of surfactant; and
   stirring the whole.
(3) The process of (1) or (2), wherein the polysaccharide is cellulose.
(4) The process of (1) or (2), wherein the polysaccharide is amylose.
(5) The process of any one of (1) to (4), wherein the crosslinking molecule is a compound having a plurality of isocyanate groups in a molecule.
(6) The process of any one of (1) to (5), wherein the modifying molecule is a compound having one isocyanate group in a molecule.
(7) The process of any one of (1) to (6), wherein the separating agent is formed into a form of beads.
(8) The process of any one of (1) to (7), wherein the separating agent has pores.

In the separating agent for chromatography, the polysaccharide derivative is crosslinked through a crosslinking molecule to form a three dimensional network structure, which significantly improves solvent resistance. Thus, the separating agent for chromatography allows use of an elution solvent such as chloroform, tetrahydrofuran, or ethyl acetate, which cannot be used for a conventional separating agent for chromatography employing a polysaccharide derivative.

The separating agent for chromatography employs no carrier at all, and consists of a polysaccharide derivative which directly contributes to separation of optical isomers. Thus, an amount of the polysaccharide derivative to be packed into a column may be increased, and an amount of a compound to be optically resolved at one time may be increased.

Further, the polysaccharide derivative has significantly enhanced mechanical strength through crosslinking, and thus the polysaccharide derivative used for a separating agent for HPLC can sufficiently withstand a pressure in HPLC.

### BRIEF DESCRIPTION OF THE DRAWINGS

Fig. 1 is a diagram showing chromatograms obtained through optical resolution of racemic body of 2, 2, 2-trifluoro-1- (9-anthryl) ethanol (9) by using columns respectively packed with separating agents for chromatography of Example 1 and Comparative Example 1 and by changing an amount of the racemic body injected at one time.
Fig. 2 is a secondary electron image (photograph) of a separating agent for chromatography of Example 1, taken by a scanning electron microscope.
Fig. 3 is a secondary electron image (photograph) of the separating agent for chromatography of Example 1, taken by a scanning electron microscope.
Fig. 4 is a secondary electron image (photograph) of a separating agent for chromatography of Example 3, taken by a scanning electron microscope.
Fig. 5 is a secondary electron image (photograph) of the separating agent for chromatography of Example 3, taken by a scanning electron microscope.
Fig. 6 is a secondary electron image (photograph) of a separating agent for chromatography of Comparative Example 1, taken by a scanning electron microscope.
Fig. 7 is a secondary electron image (photograph) of the separating agent for chromatography of Comparative Example 1, taken by a scanning electron microscope.
Fig. 8 is a secondary electron image (photograph) of beads A of Example 4 after crosslinking, taken by a scanning electron microscope.
Fig. 9 is a secondary electron image (photograph) of beads B of Example 4 after crosslinking, taken by a scanning electron microscope.
Fig. 10 is a diagram showing chromatograms obtained through optical resolution of racemic body of 2,2,2-trifluoro-1-(9-anthryl)ethanol (9) by using a column A of Example 4 and a column packed with the separating agent for chromatography of Comparative Example 1 and by changing an amount of the racemic body injected at one time.
Fig. 11 is a secondary electron image (photograph) of a separating agent for chromatography of Example 5 employing polystyrene as a porogen, taken by a scanning electron microscope.
Fig. 12 is a secondary electron image (photograph) of a separating agent for chromatography of Example 6 employing polymethyl methacrylate as a porogen, taken by a scanning electron microscope.
Fig. 13 is a secondary electron image (photograph) of a separating agent for chromatography of Example 7 employing poly-N-isopropylacrylamide as a porogen, taken by a scanning electron microscope.

### BEST MODE FOR CARRYING OUT THE INVENTION

Hereinafter, the present invention will be described.

The separating agent for chromatography is not limited to a separating agent for HPLC, and may be used for other chromatography techniques such as supercritical fluid chromatography, column chromatography, thin-layer chromatography, gas chromatography, and capillary chromatography.

The polysaccharide used as a raw material for the separating agent for chromatography may be a natural polysaccharide, a synthetic polysaccharide, or a natural modified polysaccharide so long as the polysaccharide has chirality. Of those, a polysaccharide preferably has a highly regulated bonding pattern for enhancing optical isomer separability.

A typical example of the polysaccharide is cellulose, but other examples thereof include amylose, xylan, chitosan, chitin, mannan, inulin, curdlan, starch, dextran, amylopectin, pustulan, glucan, galactan, levan, pullulan, agarose, and alginic acid. Further, starch containing amylose may also be used. Of those, cellulose, amylose, xylan, chitosan, chitin, mannan, inulin, and curdlan are preferable because each of them is an easily available high purity polysaccharide. In particular, cellulose and amylose are advantageously used.

The number average degree of polymerization of the polysaccharide (average number of pyranose rings or furanose rings in a molecule) is 5 or more, and preferably 10 or more. In general, the number average degree of polymerization thereof is desirably 3,000 or less from a viewpoint of easy handling.

Crosslinking through a crosslinking molecule is performed between a hydroxyl group at 6-position of a pyranose ring or furanose ring and a hydroxyl group at 6-position of another pyranose ring or furanose ring. According to the results of experiments by the inventors of the present invention, it is confirmed that the hydroxyl group at 6-position has a very small effect on the optical isomer separability. Thus, crosslinking of hydroxyl groups at 6-positions does not reduce the optical isomer separability. Further, the hydroxyl groups at 6-positions are very active, to thereby facilitate a crosslinking reaction through a crosslinking molecule.

By the way, the separating agent for chromatography comprises part of hydroxyl groups present in the polysaccharide as described above crosslinked to one another through a crosslinking agent. Any compound capable of crosslinking the hydroxyl groups to one another may be used as the crosslinking agent.

Examples of the crosslinking agent include: molecules each having a plurality of isocyanate groups in a molecule such as 4,4'-diphenylmethane diisocyanate, tolylene diisocyanate, and hexamethylene diisocyanate; a dicarboxylic acid; a dicarboxylic acid halide; a dicarboxylic acid amide; and a dicarboxylic acid ester.

Further, a polymerizable unsaturated group may be introduced into part of hydroxyl groups present in a polysaccharide in advance by using an unsaturated acid halide such as acryloyl chloride, methacryloyl chloride, or vinylbenzoyl chloride, or an unsaturated isocyanate compound such as vinylphenyl isocyanate. Then, the resultant can be crosslinked through copolymerization with: an unsaturated hydrocarbon monomer such as styrene, divinylbenzene, or isoprene; or a (meth)acrylic acid derivative (see JP-A-2002-148247).

Of the crosslinking agents, a compound having a plurality of isocyanate groups in a molecule is preferable because a crosslinking reaction proceeds easily and the number of reaction steps is small.

The modifying molecule for modifying each of non-crosslinked hydroxyl groups present in the polysaccharide is not particularly limited. The modifying molecule only needs to be a compound capable of modifying each of hydroxyl groups such as an isocyanic acid derivative, a carboxylic acid, an ester, an acid halide, an acid amide, a halide, an epoxy compound, an aldehyde, or an alcohol. Of those, a compound having one isocyanate group in a molecule such as phenyl isocyanate is preferable for allowing modification of each of hydroxyl groups through a simple reaction operation at high yield.

The separating agent for chromatography is preferably formed into a form of beads, to thereby increase its packing ratio in a column and provide high optical isomer separability.

In the present invention, the term "form of beads" refers to a substantially spherical form or a spherical form, that is, a form having an average ratio of a largest diameter to a smallest diameter of 1.0 to 5.0, preferably 1.0 to 2.0, and more preferably 1.0 to 1.3, obtained by measuring the largest diameter and smallest diameter of each of about 20 particles of the separating agent for chromatography.

Further, the separating agent for chromatography preferably has a particle size of 1 to 100 µm, more preferably 1 to 50 µm, and furthermore preferably 3 to 20 µm from the viewpoints of increasing its packing ratio in a column and enhancing the optical isomer separability. The particle size of the separating agent for chromatography can be adjusted through classification, for example.

The separating agent for chromatography has pores from the viewpoint of increasing a surface area of the separating agent for chromatography and enhancing the optical isomer separability.

In the present invention, the particle form or particle size of the separating agent for chromatography can be determined from an image of the separating agent for chromatography photographed by a scanning electron microscope (SEM), for example.

Introduction of the protective groups in the protective group introduction step allows assured bonding of a modifying molecule and a crosslinking molecule to predetermined hydroxyl groups.

The protective groups to be introduced in the protective group introduction step are not particularly limited so long as they are groups which can be released from hydroxyl groups more easily than the modifying molecule for modifying each of the hydroxyl groups in the modification step. For example, a modifying molecule may be used as a compound for introducing the protective groups into hydroxyl groups. The compound for introducing the protective groups may be determined based on reactivity of hydroxyl groups to be protected or modified, or reactivity of the compound to the hydroxyl groups.

Introduction of the protective groups into the hydroxyl groups, modification of each of the hydroxyl groups with the modifying molecule, and crosslinking of the hydroxyl groups through the crosslinking molecule may be performed through a known appropriate reaction in accordance with the kind of compound to be reacted with the hydroxyl groups. Release of the protective groups from the hydroxyl groups in the release step is not particularly limited, and may be performed through a known process such as hydrolysis with an acid or an alkali, for example.

In the crosslinking step, all of the recovered hydroxyl groups may be crosslinked to one another through crosslinking molecules, or part of the recovered hydroxyl groups may be crosslinked to one another. In this case, the remained hydroxyl groups are preferably modified by an operation similar to that of the modification step.

The porogen refers to a solid compound which can be dispersed in the solution of recovered polysaccharide derivative and which can be dissolved separately from the polysaccharide derivative. Various organic compounds or inorganic compounds may be used for the porogen, but an organic compound is preferably used from the viewpoints of dispersibility in the solution of recovered polysaccharide derivative, and stability of liquid drops of the solution of recovered polysaccharide derivative during beads formation as described below. Various polymers such as polystyrene can be used as the organic compounds.

The solvent used for the solution of recovered polysaccharide derivative only needs to be a solvent capable of dissolving the recovered polysaccharide derivative obtained by recovering the hydroxyl groups in the release step. The solution of recovered polysaccharide derivative may be maintained in a desired form through various processes involving, for example: including the solution in a vessel of a desired form; and forming liquid drops as in beads formation as described below. Further, the solution of recovered polysaccharide having a porogen dispersed therein may be included in a column tube. Removal of the solvent from the solution of recovered polysaccharide derivative may be performed through heating, pressure reduction, and both.

The washing solvent for dissolving the porogen in the recovered polysaccharide formed into a desired form only needs to be a solvent capable of dissolving the porogen. However, the solvent is preferably a solvent which dissolves no polysaccharide derivative and dissolves the porogen alone, more preferably a solvent which has higher solubility of the porogen than that of the polysaccharide derivative, and furthermore preferably a solvent which dissolves the porogen alone. Such a washing solvent can be selected from known solvents in accordance with the kinds of polysaccharide derivative and porogen, and the solubility of polysaccharide derivative and porogen in the solvent.

Further, the crosslinking step preferably comprises the steps of: forming a recovered polysaccharide derivative in a form of beads by dissolving in a solvent the recovered polysaccharide derivative obtained by recovering the hydroxyl groups in the modification step to form a solution of recovered polysaccharide derivative, by dropping the solution of recovered polysaccharide derivative into a solution of surfactant, and by stirring the whole; and crosslinking the recovered polysaccharide derivative in a form of beads through a crosslinking molecule to form a separating agent for chromatography in a form of beads. According to the results of experiments by the inventors of the present invention, it is confirmed that a separating agent for chromatography in a form of beads can be easily produced through such a process.

The solvent used for the solution of recovered polysaccharide derivative in the beads formation step only needs to be a solvent capable of dissolving the recovered polysaccharide derivative obtained by recovering the hydroxyl groups in the release step. In a case the solvent dissolves in the solution of surfactant, a cosolvent which is insoluble or hardly soluble in the solution of surfactant may be used additionally, to thereby form the solution of recovered polysaccharide derivative. The solution of recovered polysaccharide derivative which may contain the cosolvent is dropped into the solution of surfactant, to thereby form liquid drops of the solution of recovered polysaccharide derivative in the solution of surfactant. Then, the solvent (and/or the cosolvent) is distilled off from the solution of recovered polysaccharide derivative, to thereby form a polysaccharide derivative in a form of beads.

The surfactant is not particularly limited so long as it is a compound allowing stable presence of the liquid drops of the solution of recovered polysaccharide derivative formed in the solution of surfactant. An anionic surfactant may be used as the surfactant, for example.

The beads crosslinking step may be performed in a manner similar to that of the above-described crosslinking step.

In a case where a compound having a plurality of isocyanate groups in a molecule, such as a compound having a plurality of crosslinking sites to be bonded to hydroxyl groups of the polysaccharide or polysaccharide derivative in a molecule, is used as a crosslinking agent in the crosslinking step, the process may further comprise a step of modifying free crosslinking sites of the polysaccharide or polysaccharide derivative after crosslinking. Such a step allows suppression of interaction between the free crosslinking sites and optical isomers during optical resolution.

Modification of the crosslinking sites varies depending on the optical isomers to presumably interact with the crosslinking sites and to be optically resolved. However, in general, the modification thereof is preferably performed by using a substituent having low polarity, and is preferably performed by using a bulky substituent from the viewpoint of increasing steric hindrance to the crosslinking sites. Examples of the substituent include hydrocarbon groups each having a branched structure such as a t-butyl group and a trityl group. Modification of the crosslinking sites with such a substituent can be performed through a known appropriate reaction such as a condensation reaction, similar to the protective group introduction step, and the modification step described above.

Further, in the present invention, a separating agent for chromatography can be also produced by, in the beads formation step: dispersing a porogen in the solution of recovered polysaccharide derivative; dropping the solution of recovered polysaccharide derivative containing the porogen into a solution of surfactant to form a recovered polysaccharide derivative in a form of beads containing the porogen (porogen-containing beads); and washing the porogen-containing beads with the washing solvent to dissolve the porogen in the porogen-containing beads.

Such operations allow formation of a large number of pores in the separating agent for chromatography in a form of beads, to thereby increase or adjust the surface area of the separating agent for chromatography. Thus, optical resolving power may be enhanced or adjusted.

Dissolution of the porogen may be performed: before or after the crosslinking step for production of a separating agent for chromatography in a desired form; or before or after the beads crosslinking step for production of a separating agent for chromatography in a form of beads.

Hereinafter, description is given of concrete examples.

Only Examples 5 to 7 are in accordance with the invention.

### (Example 1) (reference example)

A separating agent for chromatography of Example 1 was in a form of beads produced as described below by using cellulose as a polysaccharide for a raw material.

### <Protective group introduction step>

First, as shown in a formula (1), tritylation of hydroxyl groups at 6-positions was performed as a protective group introduction step.

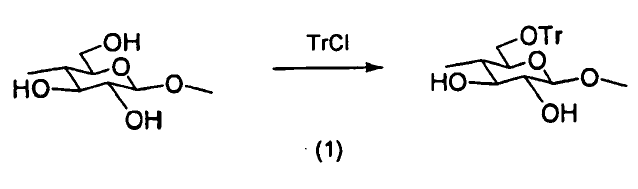

That is, 9.2 g of lithium chloride and 135 ml of dry N, N' -dimethylacetamide were added to 13 g (86 mmol) of dried cellulose, and the mixture was swelled in a nitrogen atmosphere at 100°C for 137 hours. Then, 50 g (180 mmol) of triphenylmethyl chloride and 200 ml of pyridine were added thereto for a reaction at 100°C for 28 hours. A pyridine soluble part was dropped into methanol, and an insoluble part was collected. Then, the resultant was dried under vacuum, to thereby obtain a cellulose derivative having a tritylated hydroxyl group at 6-position of a glucose ring.

### <Modification step>

Next, as shown in a formula (2), carbamoylation of hydroxyl groups remained in the thus-tritylated cellulose derivative was performed.

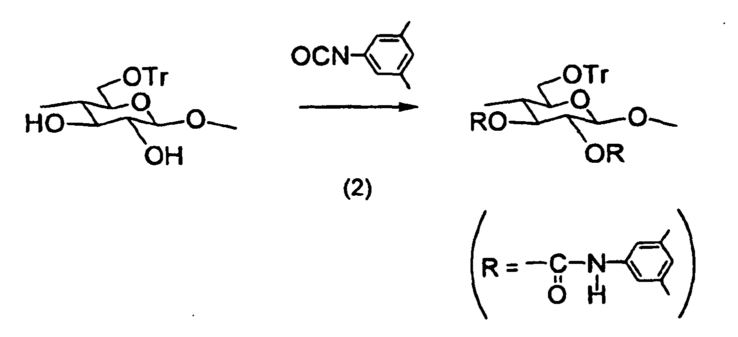

That is, 17 g of the cellulose derivative in which the hydroxyl groups at 6-positions were tritylated in the protective group introduction step was dissolved in 160 ml of pyridine, and 19 g (128 mmol) of 3,5-dimethylphenyl isocyanate was added thereto in a nitrogen atmosphere for a reaction at 80°C for 20 hours. A reaction solution was sampled for infrared absorption spectrometry to confirm the presence of unreacted isocyanate in the solution. Then, the reaction solution was dropped into methanol to collect an insoluble substance, and the resultant was dried under vacuum, to thereby obtain 28 g of cellulose 2,3-bis(3,5-dimethylphenylcarbamoyl)-6-O-tritylcellulos e.

### <Release step>

Then, as shown in a formula (3), a trityl group was released from the cellulose derivative in which the hydroxyl groups were thus-carbamoyled.

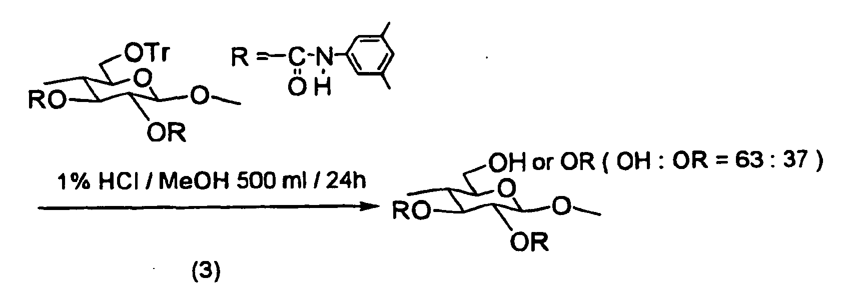

That is, 2,3-bis(3,5-dimethylphenylcarbamoyl)-6-O-tritylcellulos e obtained in the modification step was stirred in 50 ml of 1% HCl/methanol for 24 hours for deprotection, to thereby return the groups at 6-positions into hydroxyl groups. Then, a reaction liquid was washed with methanol while being filtered through a glass filter, and the resultant was dried under vacuum, to thereby obtain 20 g of cellulose 2,3-bis(3,5-dimethylphenylcarbamate).

Note that, an abundance ratio of the hydroxyl groups at 6-positions was about 63%, calculated from a 1H NMR spectrum, and the remaining hydroxyl groups were carbamated with 3,5-dimethylphenyl isocyanate. Hereinafter, this derivative is abbreviated as "OD(6-OH)-63".

### <Beads formation step>

The thus-obtained OD(6-OH)-63 was dissolved in tetrahydrofuran, and a small amount of heptanol was added thereto. Next, the resulting solution was dropped into an aqueous solution of sodium lauryl sulfate while the aqueous solution was stirred with a disperser equipped with a 6-blade type screw. After completion of the dropping, a temperature of a water bath including a vessel containing the aqueous solution was increased from room temperature to 75°C to distill off tetrahydrofuran. Formed beads were collected through suction filtration, and were washed with water and ethanol. After the washing, the resultant was dried under vacuum, to thereby obtain OD(6-OH)-63 beads consisting of OD(6-OH)-63. Note that, a beaker was used as the vessel. Table 1 shows the results of production of OD(6-OH)-63 beads.

**Table 1**

| OD-(6-OH)-63 (g) | THF (ml) | Heptanol (ml) | Dropping amount (ml) | Sodium lauryl sulfate (%) | Beads size (pm) |
|---|---|---|---|---|---|
| 3.00 | 180 | 7.2 | 60 | 0.2 | <10 |
| 2.25 | 180 | 7.2 | 30 | 0.1 | <10 |
| 2.70 | 180 | 7.2 | 30 | 0.1 | <20 |
| 2.70 | 180 | 7.2 | 50 | 0.1 | <20 |
| 2.70 | 180 | 7.2 | 50 | 0.2 | <20 |

### <Beads crosslinking step>

Then, as shown in a formula (4), a crosslinking reaction of the hydroxyl groups recovered in the release step was performed.

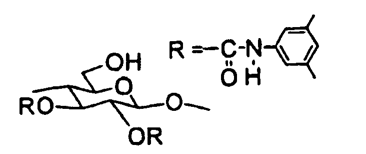

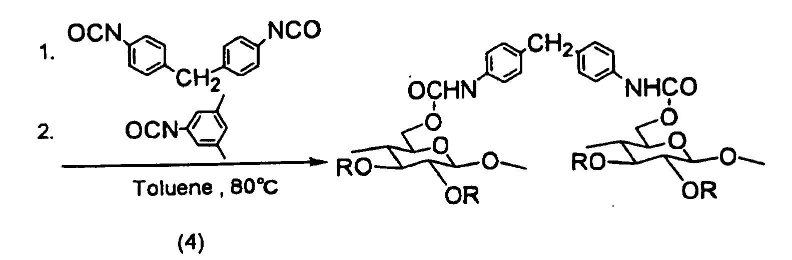

That is, 10 ml of toluene was added to 0.91 g of dried OD(6-OH)-63 beads in a nitrogen atmosphere, and the mixture was heated at 80°C for 3 hours to swell the beads. Then, 0.13 g (0.52 mmol) of 4, 4'-diphenylmethane diisocyanate was added thereto for a reaction for 6 hours. A small amount of beads was sampled to confirm that the beads became insoluble in tetrahydrofuran. Then, 0.5 g (3.4 mmol, an excess amount) of 3,5-dimethylphenyl isocyanate was added thereto for a reaction for 14 hours. The presence of unreacted isocyanate was confirmed by IR measurement, and then the beads were collected through suction filtration. The beads were washed with warmed methanol while being suctioned, to thereby remove urea formed. The absence of urea was confirmed by IR measurement, and then the beads were dried under vacuum, to thereby obtain 0.88 g of beads of Example 1 having 30% of hydroxyl groups at 6-positions crosslinked to one another.

### (Example 2) (reference example)

A separating agent for chromatography of Example 2 was obtained through a crosslinking reaction between: OD(6-OH)-63 beads obtained in the same manner as in Example 1; and 4,4'-diphenylmethane diisocyanate in an amount for crosslinking 15% of hydroxyl groups of OD(6-OH)-63. Other operations were performed in the same manner as in the process for producing beads of Example 1.

### (Example 3) (reference example)

A separating agent for chromatography of Example 3 was produced as described below by using cellulose in a form of beads as a polysaccharide for a raw material.

That is, 0.68 g of lithium chloride and 10 ml of N,N'-dimethylacetamide were added to 1.0 g (6.3 mmol) of commercially available cellulose beads ("Cellflow C-25", trade name, available from Chisso Corporation), and the beads were swelled in a nitrogen atmosphere at 80°C for 60 hours. Then, 10 ml of pyridine and 0.47 g (1.9 mmol) of 4,4'-diphenylmethane diisocyanate were added thereto for gelation. 10 ml of pyridine and 3.8 g (26 mmol) of 3,5-dimethylphenyl isocyanate were added thereto for a reaction for 22 hours. The presence of unreacted isocyanate was confirmed by IR measurement, and the beads were washed with warmed methanol while being filtered by suction, to thereby collect the beads. The beads were dried under vacuum, to thereby obtain 1.5 g of beads of Example 3 in which 30% of hydroxyl groups at 6-positions were crosslinked to one another.

### (Comparative Example 1)

A separating agent for chromatography of Comparative Example 1 comprises a 3,5-dimethylphenylcarbamate derivative of cellulose carried on silica gel, and was produced as described below. That is, porous silica gel (particle size of 7 µm, and a pore size of 100 nm) was dried, and was reacted with 3-aminopropyltriethoxysilane in benzene at 80°C in the presence of a catalytic amount of pyridine. The resultant was washed with methanol, acetone, and hexane, and was dried. A tetrahydrofuran solution (0.75 g/10 ml) of cellulose tris(3,5-dimethylphenylcarbamate) was gradually added to 3 g of silica gel thus-modified with an aminopropyl group, and the whole was shaken. Then, the solvent tetrahydrofuran was distilled off under reduced pressure, to thereby obtain a separating agent for chromatography of Comparative Example 1 comprising a 3,5-dimethylphenylcarbamate derivative of cellulose carried on silica gel.

### Evaluation

### (Optical resolution test 1)

Each of the separating agents for chromatography of Examples 1 to 3 having a particle size of 3 µm to 15 µm was sampled through screening, and was packed into a stainless steel column with a length of 25 cm and an inner diameter of 0.2 cm through a slurry process. The packing was performed by: dispersing the sampled separating agent for chromatography of each of Examples 1 to 3 was dispersed in 30 ml of hexane/liquid paraffin (2/1); using hexane/2-propanol (9/1) as a solvent; and setting a packing pressure at 50 kg/cm² (4.9 MPa).

For Example 1, a column packed at a packing pressure of 100 kg/cm² (9.8 MPa) was also produced.

The separating agent for chromatography of Comparative Example 1 was packed into a similar column through an operation similar to that described above. Note that, a packing pressure was set at 400 kg/cm² for the first few minutes and then at 100 kg/cm².

The separating agent for chromatography of Comparative Example 1 was packed into stainless steel columns with a length of 25 cm and an inner diameter of 0.46 cm, and with a length of 25 cm and an inner diameter of 0.2 cm through a slurry process.

An optical resolution test was performed on 10 kinds of racemic bodies represented by the following structural formulae 1 to 10 by using the columns packed respectively with the separating agents for chromatography of Examples 1 to 3 and of Comparative Example 1 obtained through the operations described above.

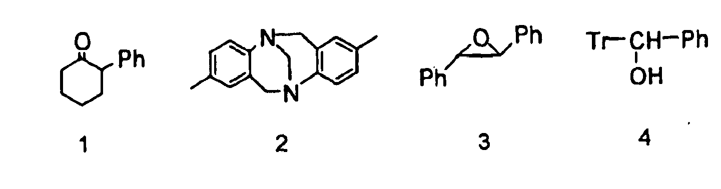

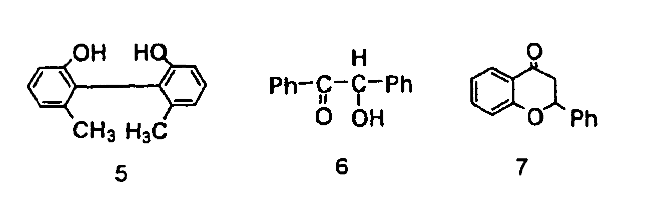

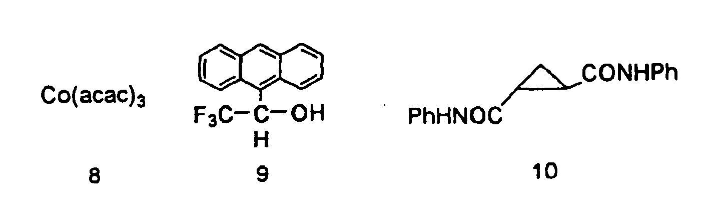

Hexane/2-propanol (9/1) was used as an eluent. In Examples 1 to 3, a flow rate was 0.2 ml/min, and in Comparative Example 1, the flow rate was 0.5 ml/min for a column having an inner diameter of 0.46 cm and was 0.1 ml/min for a column having an inner diameter of 0.2 cm. Detection was performed by using a UV detector and a polarimeter in combination. A theoretical plate number N was determined from a peak of benzene, and a time to at which the eluent passes through the column was determined from an elution time of 1,3,5-tri-tert-butylbenzene. SEM observation of the beads before and after packing confirmed no deformation of the beads due to pressure during packing. Table 2 shows the results.

**Table 2**

| | Example 1 | | | | Example 2 | | Example 3 | | Comparative Example 1 | |
|---|---|---|---|---|---|---|---|---|---|---|
| | (50 kg/cm²) | | (100 kg/cm²) | | | | | | | |
| | k₁' | α | k₁' | α | k₁' | α | k₁' | α | k₁' | α |
| 1 | 3.01 (-) | 117 | 3.67 (-) | 1.18 | 3.18 (-) | 1.18 | 3.53 (-) | ~1 | 1.17 (-) | 1. 15 |
| 2 | 2.63 (+) | 126 | 3.25 (+) | 1.25 | 2.87 (+) | 1.25 | 1.84 (+) | ∼1 | 0.97 (+) | 1.32 |
| 3 | 1.87 (-) | 138 | 2.19 (-) | 1.59 | 1.91 (-) | 1.47 | 1.15 (+) | 1.18 | 0.74 (-) | 1.68 |
| 4 | 3.81 (+) | 121 | 4.34 (+) | 1.24 | 3.87 (+) | 1.27 | --- | --- | 1.37 (+) | 1.34 |
| 5 | 5.04 (-) | 241 | 6.00 (-) | 2.47 | 5.01 (-) | 2.72 | --- | --- | 2.36 (-) | 1.83 |
| 6 | 7.56 (+) | 126 | 9.05 (+) | 1.28 | 7.65 (+) | 1.27 | 6.44 | ∼1 | 2.43 (+) | 1.58 |
| 7 | 4.18 (-) | 118 | 4.97 (-) | 1.19 | 4.07 (-) | 1.19 | --- | --- | 1.47 (-) | 1.41 |
| 8 | 2.63 (+) | 131 | 3.01 (+) | 1.33 | 1.87 (+) | 1.34 | --- | --- | 0.42 (+) | ∼1 |
| 9 | 5.39 (-) | 235 | 6.09 (-) | 2.39 | 4.89 (-) | 2.38 | --- | --- | 2.13 (-) | 2.57 |
| 10 | 4.86 (+) | 123 | 5.90 (+) | 1.32 | 4.48 (+) | 1.32 | --- | --- | 0.83 (+) | 3. 17 |

In Table 2, K₁' represents a capacity factor and α represents a separation factor. A sign in the parentheses represents optical rotatory power of an enantiomer eluted first. Table 2 reveals that the capacity factor k₁' of each of Examples 1 to 3 is 2.5 to 3 times the capacity factor k₁' of Comparative Example 1, probably because the separating agent for chromatography of each of Examples 1 to 3 employs no carrier. Thus, the separating agent for chromatography of each of Examples 1 to 3 presumably allows optical resolution of larger amounts of compounds at a time.

Table 3 shows the results of measurement of the theoretical plate number.

**Table 3**

| | Theoretical plate number |
|---|---|
| Example 1 | 1200 |
| (Packing pressure 50 kg/cm²) | |
| Example 1 | 760 |
| (Packing pressure 100 kg/cm²) | |
| Example 2 | 700 |
| Example 3 | 680 |
| Comparative Example 1 | 900 |

Table 3 reveals that the column packed with the separating agent for chromatography of Example 1 at a packing pressure of 50 kg/cm² had a theoretical plate number larger than that of Comparative Example 1.

### (Optical resolution test 2)

A maximum amount of a compound that can be separated into optical isomers at one shot was determined by using stainless steel columns with a length of 25 cm and an inner diameter of 0.2 cm packed respectively with the separating agent for chromatography of Example 1 and the separating agent for chromatography of Comparative Example 1 at a packing pressure of 50 kg/cm².

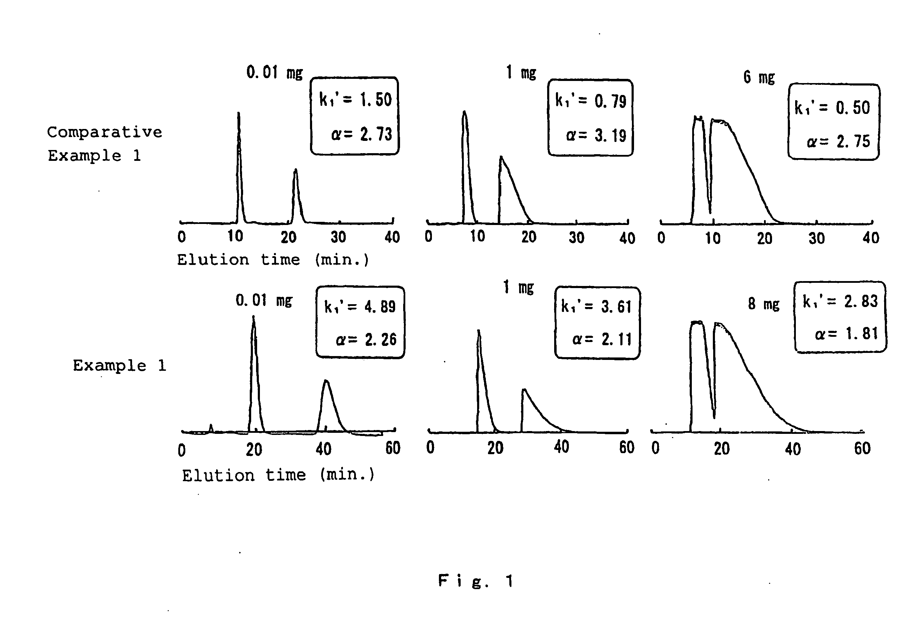

That is, racemic body of 2,2,2-trifluoro-1-(9-anthryl)ethanol was dissolved in a solvent having the same composition as that of the eluent, to thereby prepare solutions having concentrations of 10 mg/l, 40 mg/ml, and 50 mg/ml. Optical resolution was performed by using the solutions, and an amount of the racemic body providing overlapping peaks of two enantiomers in the obtained chart was referred to as the maximum amount of the compound that can be separated by the column. Fig. 1 shows the results.

Fig. 1 reveals that the column of Comparative Example 1 with an inner diameter of 0.2 cm allowed separation of only 6 mg of the racemic body, but the column of Example 1 allowed nearly complete separation of 8 mg thereof.

### (Observation with scanning electron microscope)

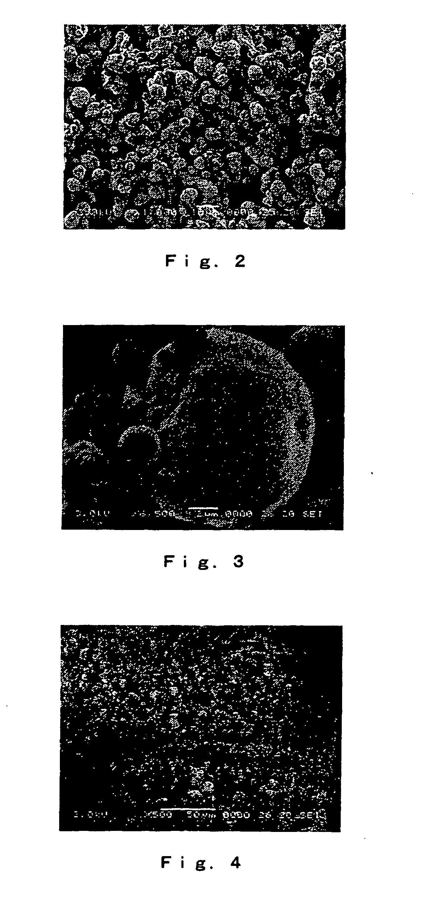

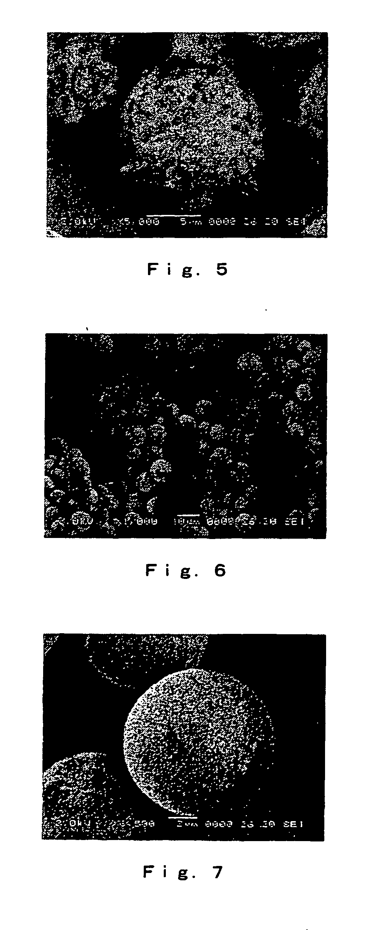

Regarding Examples 1 and 3 and Comparative Example 1, photographing by a scanning electron microscope was performed. As a result, as shown in Figs. 2 to 7, the separating agents for chromatography of Examples 1 and 3 were each in a form of beads as that of Comparative Example 1.

### (Example 4) (reference example)

### (a) Synthesis of cellulose 3,5-dimethylphenylcarbamate having hydroxyl groups at 6-positions

A 3,5-dimethylphenylcarbamate derivative of cellulose OD(6-OH) having hydroxyl groups remained at 6-positions for crosslinking one another by using diisocyanate afterwards was synthesized as a material of beads.

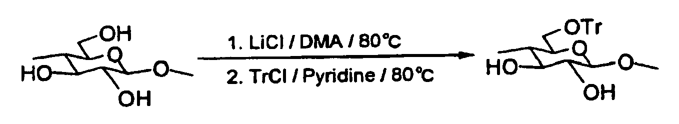

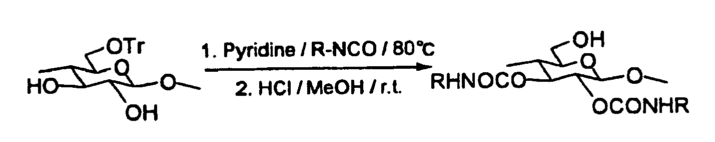

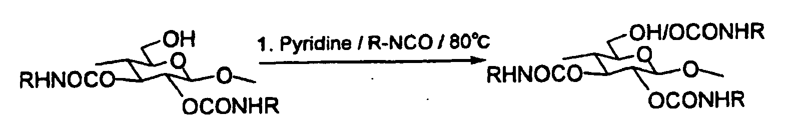

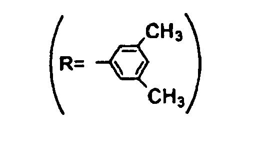

15 g of lithium chloride and 150 ml of dehydrated N, N'-dimethylacetamide were added to 10 g (62 mmol) of dried cellulose, and the mixture was swelled in a nitrogen atmosphere at 80°C for 27 hours. Then, 32 g (114 mmol) of triphenylmethyl chloride and 150 ml of pyridine were added thereto for a reaction at 80°C for 24 hours. A pyridine soluble part was dropped into methanol to collect as an insoluble part. Then, the resultant was dried under vacuum.

The obtained derivative had incompletely tritylated hydroxyl groups at 6-positions of glucose rings. Thus, 15 g of lithium chloride and 150 ml of dehydrated N,N'-dimethylacetamide were added to the derivative again, and the mixture was swelled in a nitrogen atmosphere at 80°C for 24 hours. Then, 17 g (62 mmol) of triphenylmethyl chloride and 150 ml of pyridine were added thereto for a reaction at 80°C for 24 hours. A pyridine soluble part was dropped into methanol, and an insoluble part was collected. Then, the resultant was dried under vacuum, to thereby obtain a cellulose derivative in which_ hydroxyl groups at 6-positions of glucose rings were completely tritylated.

Next, 21 g of the obtained derivative was dissolved in 190 ml of pyridine, and 22 g (150 mmol) of 3, 5-dimethylphenyl isocyanate was added to the mixture in a nitrogen atmosphere for a reaction at 80°C for 30 hours. A reaction solution was sampled for infrared absorption spectrometry to confirm the presence of unreacted isocyanate in the solution. Then, the reaction solution was dropped into methanol to collect an insoluble substance, to thereby obtain cellulose 2,3-bis(3,5-dimethylphenylcarbamoyl)-6-O-tritylcellulos e.

Then, the derivative was stirred in 1,500 ml of 1% HCl/methanol for 24 hours for deprotection, to thereby return the trityl groups at 6-positions into hydroxyl groups. Then, the resultant was washed with methanol and dried under vacuum, to thereby obtain 24 g of target cellulose 2,3-bis(3,5-dimethylphenylcarbamate).

### Synthesis of OD(6-OH)-25

Next, 10 g (22 mmol) of the obtained derivative was dissolved in 65 ml of pyridine, and 2.5 g (1.7 mmol) of 3,5-dimethylphenyl isocyanate was added to the mixture in a nitrogen atmosphere for a reaction at 80°C for 18 hours. The reaction solution was dropped into methanol to collect an insoluble substance, and the resultant was dried under vacuum. From a ratio of the derivative to 3,5-dimethylphenyl isocyanate before the reaction, it is determined that about 25% of hydroxyl groups at 6-positions of glucose rings were remained. Hereinafter, the derivative is referred to as OD(6-OH)-25.

### (b) Preparation of OD(6-OH)-25 beads

0.25 g of OD(6-OH) -25 was dissolved in 30 ml of a mixed solvent of tetrahydrofuran/heptanol (2/1, v/v). The solution of OD(6-OH)-25 was dropped into 500 ml of a 0.2% aqueous solution of sodium lauryl sulfate while the aqueous solution was stirred with a disperser at a shaft rotation speed of 1,100 rpm and a temperature of a water bath including a vessel containing the aqueous solution was increased to 75°C. After completion of the dropping, the temperature of the water bath was maintained at 75°C, to thereby distill tetrahydrofuran off. Formed beads were collected through suction filtration, and were washed with water and ethanol. After the washing, the resultant was dried under vacuum, to thereby obtain OD(6-OH)-25 beads at an yield of about 87% . The beads were subjected to repeated operations, and were classified through a 20 µm filter, to thereby collect beads having a particle size of about 3 to 10 µm.

A 6 blade-type shaft was used for the disperser, and a 1 liter-beaker was used as the vessel. The obtained beads were subjected to observation with a scanning electron microscope (SEM).

### (c) Crosslinking of OD(6-OH)-25 beads through diisocyanate

In order to provide strength to the obtained OD(6-OH)-25 beads, hydroxyl groups at 6-positions and 4,4'-diphenylmethane diisocyanate were reacted for crosslinking in the beads.

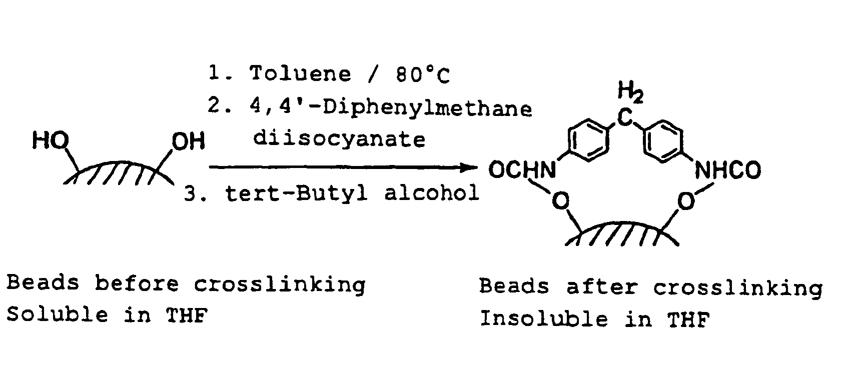

### Preparation of crosslinked beads (for column A)

20 ml of toluene was added to 1.83 g of dried OD (6-OH) -25 beads in a nitrogen atmosphere, and the mixture was heated at 80°C for 4 hours to swell the beads. Then, 0.3 g (1.2 mmol, an excess amount) of 4, 4'-diphenylmethane diisocyanate was added thereto for a reaction at 80°C for 24 hours. The presence of unreacted isocyanate was confirmed by Liquid IR measurement of a supernatant, and a small amount of beads was sampled to confirm that the beads became insoluble in tetrahydrofuran. Then, the beads were collected through suction filtration, and were washed with warmed methanol while being suctioned, to thereby remove urea formed from excess isocyanate. The absence of urea was confirmed by Solid IR measurement of the beads, and then the beads were dried under vacuum, to thereby obtain 1.83 g of beads (hereinafter, referred to as beads A) in which 25% of hydroxyl groups at 6-positions were crosslinked to one another.

### Preparation of crosslinked beads (for column B)

11 ml of toluene was added to 1.0 g of dried OD (6-OH) -25 beads in a nitrogen atmosphere, and the mixture was heated at 80°C for 4.5 hours to swell the beads. Then, 0.14 g (0.56 mmol, an excess amount) of 4,4'-diphenylmethane diisocyanate was added thereto for a reaction at 80°C for 15 hours. The presence of unreacted isocyanate was confirmed by Liquid IR measurement of a supernatant, and a small amount of beads was sampled to confirm that the beads became insoluble in tetrahydrofuran. Then, in order to modify the remained isocyanate, 10 ml (an excess amount) of tert-butanol was added for a reaction for 3 hours.

The absence of isocyanate was confirmed by Liquid IR measurement of the supernatant. Then, the beads were collected through suction filtration, and were washed with warmed methanol while being suctioned, to thereby remove urea formed from isocyanate and tert-butanol. The absence of urea was confirmed by Solid IR measurement of the beads, and then the beads were dried under vacuum, to thereby obtain 1.0 g of beads (hereinafter, referred to as beads B) in which 25% of hydroxyl groups at 6-positions were crosslinked to one another.

In the preparation of beads B, unlike the preparation of beads A, one isocyanate group of two isocyanate groups of 4,4'-diphenylmethane diisocyanate not reacting with the derivative was treated with tert-butanol for modification with bulky alcohol. In this way, an interaction between the beads B and the racemic body involved in optical resolution was not disturbed by other interactions, and was expected to be more efficient.

### Observation of OD(6-OH)-25 beads

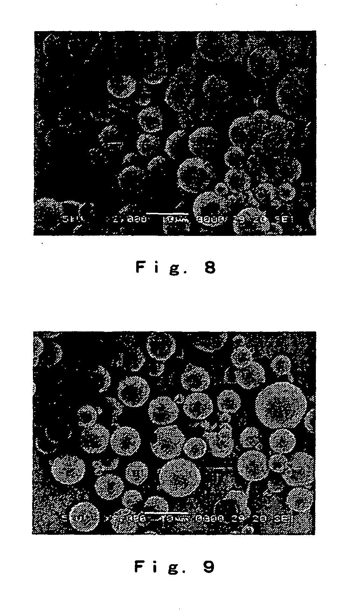

SEM observation of the beads A and B before and after the reaction revealed no changes in size or surface state of the beads before and after the reaction. Figs. 8 and 9 show SEM images of the beads A and B after the crosslinking, respectively.

### (d) Packing of beads into columns

The obtained two kinds of beads A and B were classified into particle sizes and were dispersed in 30 ml of hexane/liquid paraffin (2/1). The beads A and B were each packed into a stainless steel column with a length of 25 cm and an inner diameter of 0.2 cm under a pressure of 3 to 30 kg/cm² with an HPLC pump by using hexane/2-propanol (9/1) as an eluent through a slurry process. Obtained columns were referred to columns A and B, respectively.

### Observation of beads packed into columns

Table 4 shows the mass, surface area, theoretical plate number (N), and packing time of the beads packed into each of the columns. The observation of beads before and after packing revealed no deformation of beads due to pressure during packing.

**Table 4**

| | Mass of beads in column | Surface area of beads in column | Theoretical plate number N | Packing time |
|---|---|---|---|---|
| | (g) | (mg/g) | (-) | (hours) |
| Column A | 0.30 | 2.6 | 2250 | 30 |
| Column B | 0.36 | 2.6 | 2300 | 24 |

### (e) Evaluation of optical resolving power

An optical resolution was performed on 10 kinds of racemic bodies represented by the structural formulae 1 to 10 described above by using the columns packed with two kinds of beads obtained through the operation described above. Hexane/2-propanol (9/1) was used as an eluent, and a flow rate was 0.1 ml/min. Peaks were detected and identified by using a UV detector and a polarimeter. Note that, a theoretical plate number N was determined from the peak of benzene, and a time when the eluent passes through a column to was determined from an elution time of 1,3,5-tri-tert-butylbenzene.

### Evaluation results of optical resolving power

Table 5 shows the results of optical resolution of the racemic bodies described above by using the columns A and B. For comparison, Table 5 also shows the results of optical resolution of the racemic bodies by using the packing agent (Comparative Example 1) comprising a 3,5-dimethylphenylcarbamate derivative carried on silica gel. Value in Table 5 represents a capacity factor k₁' and a separation factor α. A sign in the parentheses represents optical rotatory power of an enantiomer eluted first.

**Table 5 Evaluation of optical resolving power of beads column**

| | Column A ^{a} | | Column B ^{a} | | Comparative Example 1^{b} | |
|---|---|---|---|---|---|---|
| | k₁' | α | k₁' | α | k₁' | α |
| 1 | 3.75 (-) | 1.19 | 3.28 (-) | 1.21 | 1.17 (-) | 1.15 |
| 2 | 3.45 (+) | 1.20 | 3.27 (+) | 1.12 | 0.97 (+) | 1.32 |
| 3 | 2.35 (-) | 1.67 | 1.99 (-) | 1.81 | 0.74 (-) | 1.68 |
| 4 | 4.91 (+) | 1.18 | 4.20 (+) | 1.20 | 1.37 (+) | 1.34 |
| 5 | 5.34 (-) | 2.77 | 4.68 (-) | 2.87 | 2.36 (-) | 1.83 |
| 6 | 8.18 (+) | 1.33 | 7.28 (+) | 1.37 | 2.43 (+) | 1.58 |
| 7 | 4.79 (-) | 1.21 | 4.18 (-) | 1. 26 | 1.47 (-) | 1.41 |
| 8 | 1.71 (+) | 1.33 | 1.77 (+) | 1.31 | 0.42 (+) | ∼1 |
| 9 | 8.84 (-) | 2.77 | 8.26 (-) | 2.94 | 2.13 (-) | 2.57 |
| 10 | 3.73 (+) | 1.40 | 3.38 (+) | 1.73 | 0.83 (+) | 3. 17 |

| | | | | | | |
|---|---|---|---|---|---|---|
| ^{a}Column, 2. Omm(i. d) X250mm. Flow rate, 0.1ml/min. Eluent, Hexane/2-propanol (90/10) ^{b}Column, 4.6mm (i. d) X250mm. Flow rate, 0.5ml/min. Eluent, Hexane/2-propanol (90/10) | | | | | | |

Comparison of the results of the columns A and B indicate that the column B had generally small capacity factors k₁' and generally large separation factors α although the column B was packed with a large amount of the derivative. The presumable reasons are that the column B was treated with tert-butanol to eliminate interactions disturbing separation of the racemic body.

Further, an elution order of the racemic bodies for all the beads columns was the same as that for a conventional carried-type column. The beads columns each had 2.5 to 4 times larger capacity factors k₁' than those of the columns comprising the derivative carried on silica gel. This result was presumably obtained because a large amount of the cellulose derivative was introduced into the column without use of silica gel. It is expected to allow optical resolution of a larger amount of racemic body at one time.

### (f) Large-scale separation of

### 2,2,2-trifluoro-1-(9-anthryl)ethanol

The column packed with beads includes a larger amount of the polysaccharide derivative in a column than that in a conventional silica gel carried-type column of the same size, and is expected to be capable of separating a larger amount of a racemic body at one time than that of the silica gel carried-type column. An amount of racemic body 2,2,2-trifluoro-1-(9-anthryl)ethanol (9) that can be separated at one time was studied by using the column A and the silica gel carried-type column.

In this case, the racemic body was dissolved in a solvent having the same composition as that of the eluent to prepare a 120 mg/ml of solution, and optical resolution was performed with the solution. A column with a length of 25 cm and an inner diameter of 0.2 cm was used, and hexane/2-propanol (9/1) was used as the eluent. The flow rate of the eluent was 0.20 ml/min for the silica gel carried-type column, and was 0.15 ml/min for the column A. An amount of the racemic body providing overlapping peaks of two enantiomers in the obtained chart was referred to as the maximum amount of the compound that can be separated by the column.

### Result of large-scale separation of

### 2,2,2-trifluoro-1-(9-anthryl)ethanol

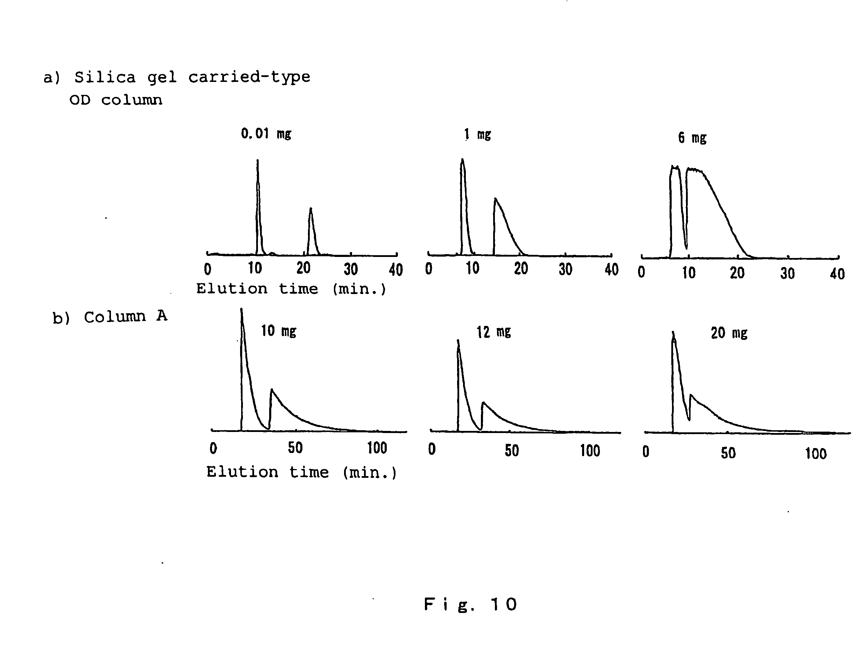

Fig. 10 shows the results of large-scale separation of the racemic body 2,2,2-trifluoro-1-(9-anthryl)ethanol. A measurement wavelength was 271 nm. As a result, two peaks overlapped with injection of 6 mg of the racemic body for the carried-type column and with injection of 20 mg of the racemic body for the column A.

### (Examples 5 to 7)

### Preparation of cellulose derivative beads having pores

For preparation of cellulose derivative beads, a polymer as a porogen was added to a THF/1-heptanol mixed solution of the cellulose derivative. The mixture was dropped into an aqueous solution of sodium lauryl sulfate under stirring, and the whole was heated to distill off THF. The obtained beads were washed with a solvent capable of dissolving the polymer used as the porogen to wash away the porogen, and pores were observed in the beads. The number or size of the pores varied depending on the kind or concentration of the porogen used.

25 mg of cellulose 3,5-dimethylphenylcarbamate having hydroxyl groups in part of 6-positions was dissolved in 3 ml of a mixed solvent of tetrahydrofuran/heptanol (2/1, v/v), and the polymer used as the porogen was dissolved therein in a ratio of about 20 mass% with respect to the amount of cellulose derivative. The solution of OD(6-OH)-25 was dropped into 100 ml of a 0.2% aqueous solution of sodium lauryl sulfate while the aqueous solution was stirred with a disperser at a shaft rotation speed of 1,100 rpm and a temperature of a water bath including a vessel containing the aqueous solution was increased to 75°C.

After completion of the dropping, the temperature of the water bath was maintained at 75°C to distill tetrahydrofuran off. Formed beads were collected through suction filtration, and were washed with water, ethanol, and a solvent capable of dissolving only the porogen. After the washing, the resultant was dried under vacuum, to thereby obtain cellulose derivative beads having pores and a particle size of about 3 to 12 µm.

A 6 blade-type shaft was used for a shaft of the disperser, and a 200 ml-beaker was used as the vessel. Polystyrene (PSt, molecular weight: 17, 000, Mw/Mn: 1.03), polymethyl methacrylate (PMMA, molecular weight: 42,000, Mw/Mn: 1.40), and poly-N-isopropylacrylamide (PNIPAM, molecular weight: 28,000, Mw/Mn: 1.85) were used as porogens.

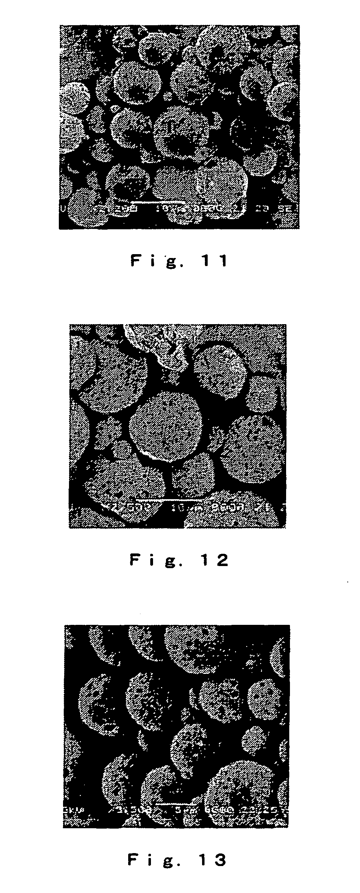

The obtained beads were subj ected to observation with a scanning electron microscope (SEM). Figs. 11 to 13 shows the SEM images of the obtained beads.

### INDUSTRIAL APPLICABILITY

The separating agent for chromatography produced according to the present invention comprises the polysaccharide derivative crosslinked through the crosslinking molecule. Therefore, solvent resistance and mechanical strength are significantly improved. Accordingly, in comparison with a conventional separating agent for chromatography, a solvent having stronger eluting power can be used. Further, the separating agent for chromatography can be sufficiently used even under high pressure conditions such as for HPLC.

Further, the separating agent for chromatography employs no carrier. Therefore, an amount of the polysaccharide derivative to be packed into a column may be increased, and an amount of a compound to be optically resolved at one time may be increased, and for example, productivity in industrial production of optical isomers may be further improved.

## Claims

1. A process for producing a separating agent for chromatography, said separating agent using a polysaccharide derivative derived from a polysaccharide, the polysaccharide derivative having a structure in which part of the hydroxyl groups present in the polysaccharide are crosslinked with one another through a crosslinking molecule to form a three-dimensional network structure and non-crosslinked hydroxyl groups present in the polysaccharide are each modified with a modifying molecule, the crosslinking through a crosslinking molecule being performed between a hydroxyl group at 6-position of a pyranose ring or furanose ring and a hydroxyl group at 6-position of another pyranose ring or furanose ring, wherein the polysaccharide derivative is not carried on a carrier, wherein the process comprises the steps of:
introducing protective groups into part of the hydroxyl groups present at 6-position of a pyranose ring or furanose ring in a polysaccharide;
modifying with a modifying molecule each of the hydroxyl groups remaining in the polysaccharide having the protective groups introduced;
releasing the introduced protective groups to recover the hydroxyl groups;
dissolving in a solvent a recovered polysaccharide derivative obtained by recovering the hydroxyl groups in the release step;
dispersing a porogen in an obtained solution of recovered polysaccharide derivative;
maintaining in a desired form the solution of recovered polysaccharide derivative having the porogen dispersed and removing the solvent to form the recovered polysaccharide derivative in a desired form;
crosslinking the recovered hydroxyl groups to one another through a crosslinking molecule; and
washing the formed recovered or crosslinked polysaccharide derivative with a washing solvent capable of dissolving the porogen.

2. The process of claim 1, wherein the maintaining step comprises the steps of:
dropping the solution of the recovered polysaccharide derivative having the porogen dispersed into a solution of surfactant; and
stirring the whole.

3. The process of claim 1 or 2, wherein the polysaccharide is cellulose.

4. The process of claim 1 or 2, wherein the polysaccharide is amylose.

5. The process of any one of claims 1 to 4, wherein the crosslinking molecule is a compound having a plurality of isocyanate groups in a molecule.

6. The process of any one of claims 1 to 5, wherein the modifying molecule is a compound having one isocyanate group in a molecule.

7. The process of any one of claims 1 to 6, wherein the separating agent is formed into a form of beads.

8. The process of any one of claims 1 to 7, wherein the separating agent has pores.

## Patentansprüche

1. Verfahren zum Herstellen eines Trennmittels für Chromatographie, wobei das Trennmittel ein von einem Polysaccharid abgeleitetes Polysaccharidderivat verwendet, wobei das Polysaccharidderivat eine Struktur aufweist, in welcher ein Teil der in dem Polysaccharid vorhandenen Hydroxylgruppen durch ein Vernetzungsmolekül miteinander vernetzt sind unter Bildung einer dreidimensionalen Netzwerkstruktur und in dem Polysaccharid vorhandene nicht vernetzte Hydroxylgruppen jeweils mit einem modifizierenden Molekül modifiziert sind, wobei das Vernetzen durch ein Vernetzungsmolekül zwischen einer Hydroxylgruppe in 6-Stellung eines Pyranoserings oder Furanoserings und einer Hydroxylgruppe in 6-Stellung eines anderen Pyranoserings oder Furanoserings erfolgt, wobei das Polysaccharidderivat nicht auf einem Träger aufgetragen ist, wobei das Verfahren die Schritte umfasst:
das Einführen von Schutzgruppen in einen Teil der Hydroxylgruppen, die in 6-Stellung eines Pyranoserings oder Furanoserings in einem Polysaccharid vorhanden sind;
das Modifizieren von jeder der Hydroxylgruppen, die in dem Polysaccharid übrigbleiben, in das die Schutzgruppen eingeführt sind, mit einem modifizierenden Molekül;
das Freisetzen der eingeführten Schutzgruppen, um die Hydroxylgruppen zurückzugewinnen;
das Auflösen eines zurückgewonnenen Polysaccharidderivats, das durch Zurückgewinnen der Hydroxylgruppen in dem Freisetzungsschritt erhalten wird, in einem Lösungsmittel;
das Dispergieren eines Porogens in einer erhaltenen Lösung des zurückgewonnenen Polysaccharidderivats;
das Halten der Lösung des zurückgewonnenen Polysaccharidderivats mit dem dispergierten Porogen in einer gewünschten Form und das Entfernen des Lösungsmittels, um das zurückgewonnene Polysaccharidderivat in einer gewünschten Form zu bilden;
das Vernetzen der zurückgewonnenen Hydroxylgruppen miteinander durch ein Vernetzungsmolekül; und
das Waschen des gebildeten zurückgewonnenen oder vernetzten Polysaccharidderivats mit einem Waschlösungsmittel, das das Porogen auflösen kann. ,

2. Verfahren nach Anspruch 1, wobei der Halteschritt die Schritte umfasst:
das Tropfen der Lösung des zurückgewonnenen Polysaccharidderivats mit dem dispergierten Porogen in eine Lösung eines oberflächenaktiven Stoffs; und
das Rühren des Ganzen.

3. Verfahren nach Anspruch 1 oder 2, wobei das Polysaccharid Cellulose ist.

4. Verfahren nach Anspruch 1 oder 2, wobei das Polysaccharid Amylose ist.

5. Verfahren nach einem der Ansprüche 1 bis 4, wobei das Vernetzungsmolekül eine Verbindung mit einer Mehrzahl von Isocyanatgruppen in einem Molekül ist.

6. Verfahren nach einem der Ansprüche 1 bis 5, wobei das modifizierende Molekül eine Verbindung mit einer Isocyanatgruppe in einem Molekül ist.

7. Verfahren nach einem der Ansprüche 1 bis 6, wobei das Trennmittel in die Form von Perlen gebracht wird.

8. Verfahren nach einem der Ansprüche 1 bis 7, wobei das Trennmittel Poren aufweist.

## Revendications

1. Procédé pour produire un agent de séparation pour chromatographie, ledit agent de séparation utilisant un dérivé de polysaccharide dérivant d'un polysaccharide, le dérivé de polysaccharide ayant une structure dans laquelle une partie des groupes hydroxyle présents dans le polysaccharide sont réticulés les uns avec les autres par l'intermédiaire d'une molécule de réticulation pour former une structure en réseau tridimensionnel et chacun des groupes hydroxyle non réticulés présents dans le polysaccharide est modifié avec une molécule de modification, la réticulation par l'intermédiaire d'une molécule de réticulation étant effectuée entre un groupe hydroxyle en position 6 d'un cycle pyranose ou d'un cycle furanose et un groupe hydroxyle en position 6 d'un autre cycle pyranose ou cycle furanose, dans lequel le dérivé de polysaccharide n'est pas supporté sur un support, lequel procédé comprend les étapes consistant à :
introduire des groupes protecteurs dans une partie des groupes hydroxyle présents en position 6 d'un cycle pyranose ou d'un cycle furanose dans un polysaccharide ;
modifier, avec une molécule de modification, chacun des groupes hydroxyle restants dans le polysaccharide dans lequel ont été introduits des groupes protecteurs ;
libérer les groupes protecteurs introduits pour récupérer les groupes hydroxyle ;
dissoudre dans un solvant un dérivé de polysaccharide récupéré, obtenu par récupération des groupes hydroxyle dans l'étape de libération ;
disperser un porogène dans une solution obtenue de dérivé de polysaccharide récupéré ;
maintenir sous une forme souhaitée la solution de dérivé de polysaccharide récupéré dans laquelle est dispersée le porogène et éliminer le solvant pour former le dérivé de polysaccharide récupéré sous une forme souhaitée ;
réticuler les groupes hydroxyle récupérés les uns avec les autres par l'intermédiaire d'une molécule de réticulation ; et
laver le dérivé de polysaccharide réticulé ou récupéré formé avec un solvant de lavage capable de dissoudre le porogène.

2. Procédé selon la revendication 1, dans lequel l'étape de maintien comprend les étapes consistant à :
verser goutte à goutte la solution du dérivé de polysaccharide récupéré, dans laquelle est dispersé le porogène, dans une solution de tensioactif ; et
agiter le tout.

3. Procédé selon la revendication 1 ou 2, dans lequel le polysaccharide est une cellulose.

4. Procédé selon la revendication 1 ou 2, dans lequel le polysaccharide est une amylose.

5. Procédé selon l'une quelconque des revendications 1 à 4, dans lequel la molécule de réticulation est un composé ayant une pluralité de groupes isocyanate par molécule.

6. Procédé selon l'une quelconque des revendications 1 à 5, dans lequel la molécule de modification est un composé ayant un seul groupe isocyanate par molécule.

7. Procédé selon l'une quelconque des revendications 1 à 6, dans lequel l'agent de séparation a la forme de perles.

8. Procédé selon l'une quelconque des revendications 1 à 7, dans lequel l'agent de séparation a des pores.
